# EUROPÄISCHE PATENTSCHRIFT

(11) **EP 1 726 635 B1**
(45) Veröffentlichungstag und Bekanntmachung des Hinweises auf die Patenterteilung: **02.09.2009**
(21) Anmeldenummer: 06008624.6
(22) Anmeldetag: 26.04.2006
(51) Int. Cl.: C10M 173/02, C03B 33/09, C03B 33/02

(54) **Verfahren zum Trennen von Glas und Verwendung der dafür geeigneten Schneidflüssigkeit**
Process for severing glass and use of the cutting fluid suitable therefor
Procédé de sectionnement du verre et utilisation du fluide de coupage approprié

(30) Priorität: 28.05.2005 DE 102005024563
(43) Veröffentlichungstag der Anmeldung: 29.11.2006
(73) Patentinhaber: Schott AG, 55122 Mainz (DE)
(72) Erfinder: Hoetzel, Bernd, 55286 Wörrstadt (DE); Habeck, Andreas, Dr., 55257 Budenheim (DE); Perathoner, Ortrud, 55271 Stadecken-Elsheim (DE)
(74) Vertreter: Fuchs

(56) Entgegenhaltungen:
- WO-A-20/04018144
- FR-A- 2 809 318
- US-A- 6 086 736
- US-A1- 2004 219 372
- THIES M ET AL: "MULTICOMPONENT DIFFUSION OF DISTEARYLDIMETHYLAMMONIUM POLYELECTROLYTE SOLUTIONS IN THE PRESENCE OF SALT: COUPLED TRANSPORT OF SODIUM CHLORIDE" JOURNAL OF PHYSICAL CHEMISTRY, AMERICAN CHEMICAL SOCIETY, US, Bd. 100, Nr. 23, 1. Januar 1996 (1996-01-01), Seiten 9881-9891, XP009044944 ISSN: 0022-3654

## Beschreibung

Gegenstand der Erfindung ist ein Verfahren zum Trennen von Glas und eine dafür geeignete Schneidflüssigkeit.

Es ist bereits seit langem aus der Glasbläserei bekannt, dass die Anfeuchtung des Ritzes, z.B. mit Wasser, beim Ritzen und Brechen von Glas die Trennung des Glases erleichtert und fördert. Bei dem Ritzen mittels Laser dient das Wasser gleichzeitig noch als Kühlmittel zur Erzeugung der Bruchspannung in der Glasoberfläche, siehe z.B. US-6,252,197. Zur Förderung des Eindringens des Wassers in den Ritzspalt ist es auch bereits bekannt, dem Wasser, z.B. beim Laserschneiden, Tenside zuzusetzen (US 2003/0052098 A1). Alle bekannten Netzmittelklassen, anionische, kationische und nichtionische Netzmittel sind geeignet (W02004/018144 A1).

Insbesondere bei dem Schneiden von Dünnstglas, z.B. für LCD-Anwendungen, mittels Laserstrahlen ist es wichtig, dass bei dem Brechen des Glases nach dem Ritzen möglichst konstante Verhältnisse vorliegen.

Bei dem Laserschneiden wird, im Gegensatz zu den Ritzmethoden mit Diamant oder Schneidrad, das zu trennende Glas entlang der Ritzlinie mittels eines Laserstrahls sehr schnell erhitzt. Unmittelbar nach dem Erhitzen wird die erhitzte Stelle, im allgemeinen durch Aufsprühen eines Gas-Wasser-Gemisches abgeschreckt. Es bilden sich dadurch in dem Glas so hohe thermische Spannungen aus, dass ein Ritz entsteht. Längs der geritzten Linie wird das Glas dann durch Aufbringen einer Kraft gebrochen. Die Kraft kann mechanisch eingebracht werden, es ist aber auch möglich, durch nochmaliges Behandeln des Glases längs der Ritzlinie mit einem Laser noch einmal zusätzliche thermische Spannungen in dem Glas zu erzeugen, so dass das Glas längs der Ritzlinie bricht.

Die Aufgabe der Erfindung besteht darin, ein Verfahren zum Trennen von Glas sowie eine dafür geeignete Schneidflüssigkeit zu finden, mit dem bzw. der eine weitere Erniedrigung der Drehkraft bei gleichzeitiger Reduzierung der Brechkraftschwankungen im industriellen Betrieb möglich ist.

Diese Aufgabe wird durch das in Patentanspruch 1 beschriebene Verfahren und die im Patentanspruch 7 beschriebene Schneidflüssigkeit gelöst.

Es konnte gefunden werden, dass bei einem Verfahren zum Trennen von Glas, bei dem ein Ritz entlang einer Trennlinie unter gleichzeitig mit oder unmittelbar nach Erzeugung des Ritzes stattfindender Beaufschlagung mit einer wässrigen Schneidflüssigkeit, die eine organische ionische Verbindung mit einem Hydroxyl-ion als Anion und einem Kation mit einem positiv geladenen Stickstoffatom enthält, das anschließende Trennen des Glases entlang der Trennlinie mit einer deutlich geringeren und dazu gleichmäßigeren Kraft erfolgen kann als bisher bekannt.

Eine mögliche wissenschaftliche Erklärung für die überragende Wirkung der gefundenen Verbindungen könnte darin bestehen, dass das OH-lon mit den beim Ritzen aufgebrochenen Siloxanbindungen reagiert und damit eine spontane Reaktion der aufgebrochenen Bindungen miteinander (Selbstheilung) verhindert.

Besonders geeignet ist das Verfahren sowie die neue Schneidflüssigkeit für das Laserschneidverfahren, bei dem der Ritz durch Aufheizen des Glases längs der Trennlinie und unmittelbar nachfolgendes Beaufschlagen des aufgeheizten Glases mit der wässrigen Flüssigkeit (der Schneidflüssigkeit) erfolgt. Der beim Laserschneiden erzeugte Ritz bzw. Spalt ist besonders eng, so dass sich hier die Selbstheilungskräfte besonders stark auswirken können.

Das Aufbringen der Schneidflüssigkeit auf der Ritz kann mit allen bekannten Techniken erfolgen, z.B. Aufspritzen, Aufsprühen, Aufsprühen eines Flüssigkeits-/Wassergemisches, Aufbringen mittels eines Dochtes, eines Schwammes, Eintauchen des Ritzes in die Schneidflüssigkeit usw.

Als wirksame Verbindungen in der Schneidflüssigkeit besonders geeignet sind quaternäre Ammoniumhydroxide.

Als quaternäre Ammoniumhydroxide sind insbesondere solche geeignet, deren Kationen die nachstehenden Formeln haben:

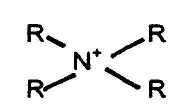

Die Reste R sind dabei geradkettige oder verzweigte aliphatische Reste. Von den Resten R haben zwei bis drei Reste eine Kettenlänge von 1 bis 2 C-Atomen, während 1 bis 2 der Reste R eine Größe von 8 bis 18 C-Atomen besitzen. Besonders geeignet sind die Dialkyldimethylammonium-Verbindungen wie Distearyldimethylammoniumhydroxid, Didecyldimethylammoniumhydroxid, Dimethyldioctylammoniumhydroxid, Dilauryldimethylammoniumhydroxid, weiterhin quatemäre Ammoniumhydroxide mit drei kurzkettigen und einem langkettigen Alkylrest, insbesondere sind bevorzugt Trimethylhexadecyclammoniumhydroxid, Octadecyltrimethylammoniumhydroxid und Trimethyloctylammoniumhydroxid.

Weiterhin geeignet sind Alkyldimethylbenzylammoniumhydroxide mit Kationen der Formel 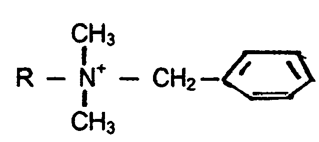 bei denen der Rest R ein geradkettiger oder verzweigter Alkylrest mit 7 bis 17 C-Atomen ist.

Weiterhin geeignet sind quatemäre Ammoniumverbindungen mit Kationen der allgemeinen Formel 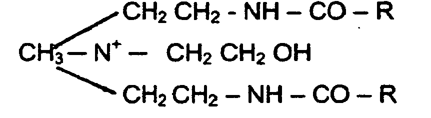 in der R ein geradkettiger oder verzweigter Alkyrest mit 8 bis 18 C-Atomen ist.

Neben den quaternären Ammoniumhydroxiden sind ferner Imidazolinderivate mit Kationen der allgemeinen Formel 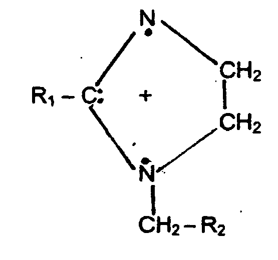 geeignet, in der R₁ ein Alkyl- oder Alkylenrest mit 4 bis 20 C-Atomen darstellt und R₂ CH₂OH oder CH₂NH-COR₃, wobei R₃ ein Alkylrest mit 8 bis 18 C-Atomen ist, bedeuten.

Besonders geeignet ist 1-(Octylaminoethyl)-2-decyl-3-methyl-imidazoloniumhydroxid.

Diese Verbindungen sind in der Schneidflüssigkeit in Mengen von 0,005 bis 1 Gew.-% enthalten. Unterhalb von 0,005 Gew.-% gleicht sich die Wirkung der Lösung immer mehr der des Wassers an, oberhalb von 1 Gew.-% steigt die Wirksamkeit des Zusatzes nicht mehr bzw. nimmt evtl. durch Schaumbildung wieder ab. Bevorzugt sind die Verbindungen in Mengen von 0,02 bis 0,1 Gew.-% enthalten, da in diesem Bereich gute Wirkung mit gleichzeitig geringem Chemikalienverbrauch kombiniert sind. Es können selbstverständlich auch Gemische aus mehreren Verbindungen zur Anwendung kommen.

Falls erforderlich, kann die Schneidflüssigkeit noch Lösungsvermittler für die zugesetzten Verbindungen enthalten, in erster Linie niedermolekulare Alkohole, z.B. Methanol, Ethanol, Propanole und Butanole in Anteilen von bis zu 80 Vol.-% der Schneidflüssigkeit, ferner Korrosionsschutzmittel, Bakterizide, falls erforderlich, Verdickungsmittel und dergleichen.

Die Schneidflüssigkeit erleichtert nicht nur das Trennen von Glas durch Lasereinwirkung, sondern erleichtert auch das konventionelle Glasschneiden, z.B. durch Diamantritzen oder mittels Schneidrädchen. Sie reduziert und vergleichmäßigt auch bei diesen Verfahren die Brechkraft und eignet sich daher besonders für das Schneiden von empfindlichren Gegenständen, z.B. Dünngläsern für TFT-Bildschirme.

Von besonderem Vorteil bei der gefundenen Schneidflüssigkeit bzw. dem Verfahren ist es, dass keinerlei störende Anionen vorhanden sind, die bei der Weiterverarbeitung der getrennten Glasscheiben in späteren Arbeitsprozessen stören könnten.

### Beispiele:

Mittels einer Laserschneidmaschine, Typ DLC 1200/Blue der Fa. Schott Advanced Processing wurden Glasplatten einer Abmessung von 25 mm x 150 mm mit einer Dicke von 0,7 mm hergestellt. Diese Glasplatten erhielten mittig bei 75 mm einen Querriss, der eine Tiefe von etwa 115 µm hatte. Während des Laserritzens wurde die Glasplatte unmittelbar hinter dem Laser-Brennfleck mit einer Mischung aus 401/min Luft und 6 ml/min Schneidflüssigkeit beaufschlagt. Nach dem Ritzen wurde die Platte getrocknet. Der Ritz wurde mit einer Vorschubgeschwindigkeit von 15 m/min hergestellt. Die Glasplatten wurden an beiden Schmalseiten jeweils auf einer Strecke von 10 mm unterstützt, der Ritz zeigte nach unten. Anschließend wurde die Glasplatte von oben bis zum Bruch belastet. Die Angabe der Brechkraft erfolgt in kg. Es wurden verschiedene Schneidflüssigkeiten an jeweils ca. 30 Probeplättchen untersucht. Beispiel 1 zeigt die Wirkung von reinem (deionisierten) Wasser, die Beispiele 2 - 5 zeigen die Wirkung von verschiedenen Konzentrationen einer erfindungsgemäßen, Hexadecyltrimethylammoniumhydroxid in verschiedenen Konzentrationen enthaltenden wässrigen Schneidflüssigkeit und die Beispiele 6 bis 8 zeigen zum Vergleich die Wirkungen einer wässrigen Schneidflüssigkeit gemäß dem Stand der Technik, die als wirksame Substanz Cetyltrimethylammoniumbromid (CTAB) in verschiedenen Konzentrationen enthielt. Es zeigt sich deutlich, dass die erfindungsgemäßen Schneidflüssigkeiten gegenüber den Flüssigkeiten gemäß dem Stand der Technik überlegene Eigenschaften und insbesondere schon bei ganz geringen Konzentrationen eine sehr niedrige und vor allem auch nicht wesentlich schwankende Brechkraft hervorrufen.

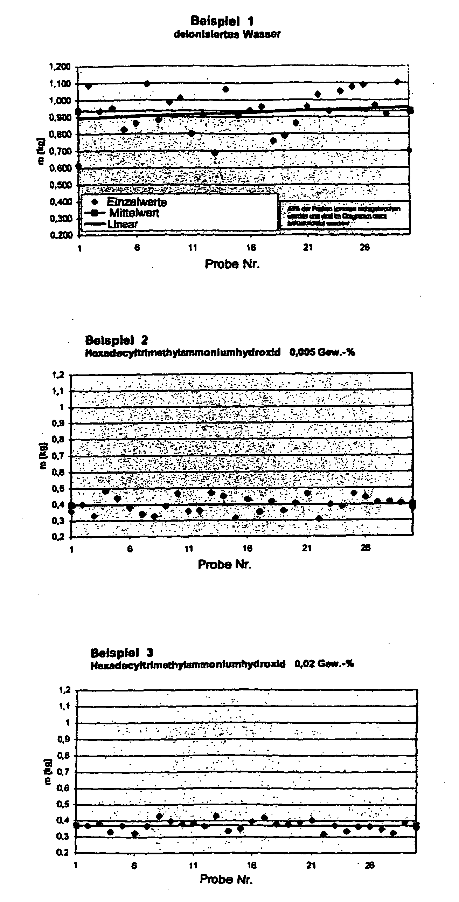

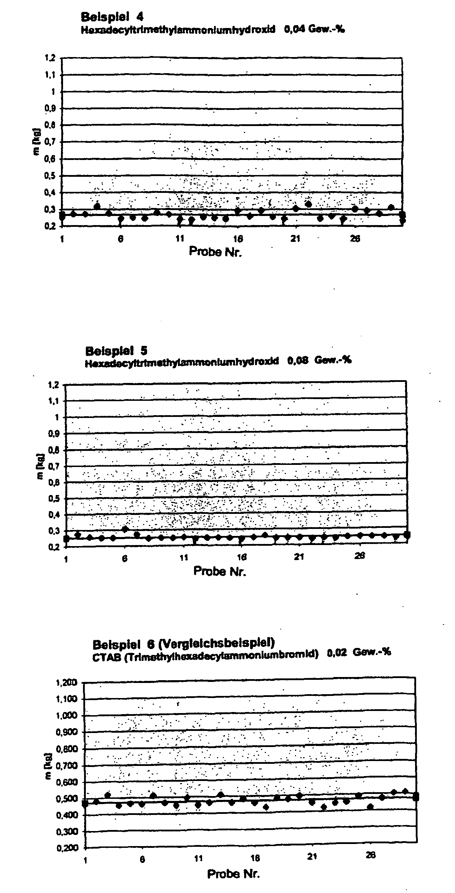

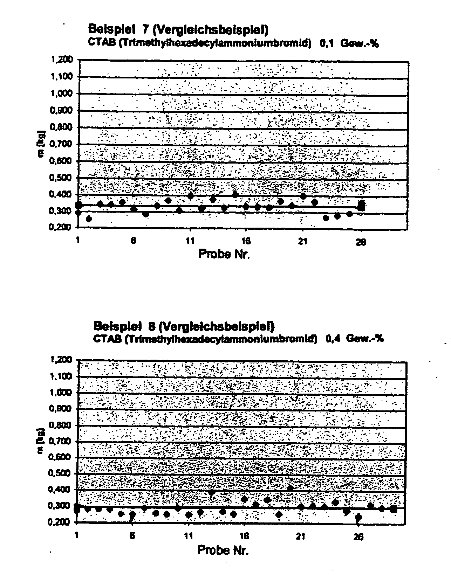

## Patentansprüche

1. Verfahren zum Trennen von Glas mit den Schritten
- Erzeugen eines linienförmigen Ritzes auf dem Glas
- Wobei der Ritz während oder unmittelbar nach seiner Erzeugung mit einer wässrigen Flüssigkeit, die eine organische ionische Verbindung enthält, die aus einem Kation mit einem positiv geladenen Stickstoffatom und einem Hydroxylion als Anion besteht, beaufschlagt wird
- Trennen des Glases entlang der Ritzlinie durch Aufbringen einer Kraft:

2. Verfahren nach Anspruch 1, **dadurch gekennzeichnet, dass** der Ritz durch Aufheizen des Glases längs der Ritzlinie und unmittelbar nachfolgendes Beaufschlagen mit der wässrigen Flüssigkeit erzeugt wird.

3. Verfahren nach Anspruch 2, **dadurch gekennzeichnet, dass** das Aufheizen des Glases längs der Ritzlinie mittels eines Laserstrahls erfolgt.

4. Verfahren nach einem oder mehreren der Ansprüche 1 bis 3, **dadurch gekennzeichnet, dass** eine wässrige Flüssigkeit verwendet wird, die 0,005 bis 1 Gew.-% der organischen ionischen Verbindung enthält.

5. Verfahren nach einem oder mehreren der Ansprüche 1 bis 4, **dadurch gekennzeichnet, dass** man eine organische ionische Verbindung verwendet, bei der das Kation die Formel hat 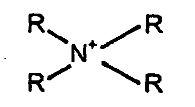 in der 2 bis 3 der R Alkylreste mit 1 bis 2 C-Atomen und 1 bis 2 der Reste R geradkettige oder verzweigte Alkylreste mit 8 - 18 C-Atomen sind,
und/oder 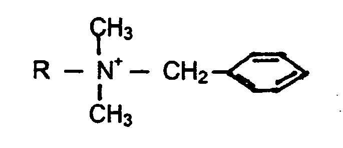 in der R ein geradkettiger oder verzweigter Alkylrest mit 7 bis 17 C-Atomen ist
und/oder 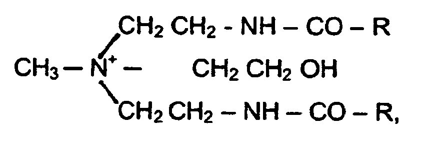 in der R geradkettige oder verzweigte Alkylreste mit 8 bis 18 C-Atomen sind
und/oder 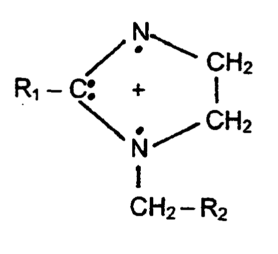 in der R₁ ein Alkyl- oder Alkylenrest mit 4 bis 20 C-Atomen darstellt und R₂ CH₂OH oder CH₂NH-COR₃, wobei R₃ ein Alkylrest mit 8 bis 18 C-Atomen ist, bedeuten.

6. Verfahren nach einem oder mehreren der Ansprüche 1 bis 5, **dadurch gekennzeichnet, dass** man eine wässrige Flüssigkeit verwendet, die Hexadecyltrimethylammoniumhydroxid enthält.

7. Verwendung einer wässrigen Flüssigkeit, die eine organische ionische Verbindung enthält, die aus einem Kation mit einem positiv geladenen Stickstoffatom und einem Hydroxylion als Anion besteht, als Schneidflüssigkeit für das Trennen von Glas.

8. Verwendung einer Schneidflüssigkeit nach Anspruch 7, **dadurch gekennzeichnet, dass** sie 0,005 bis 1 Gew.-% der organischen ionischen Verbindung enthält.

9. Verwendung einer Schneidflüssigkeit nach Anspruch 7 oder 8, **dadurch gekennzeichnet, dass** sie eine organischen ionische Verbindung enthält, bei der das Kation die Formel hat 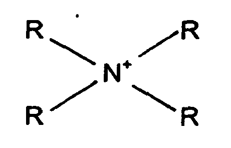 in der 2 bis 3 der R Alkylreste mit 1 bis 2 C-Atomen und 1 bis 2 der Reste R geradkettige oder verzweigte Alkylreste mit 8 - 18 C-Atomen sind,
und/oder 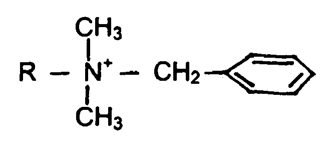 in der R ein geradkettiger oder verzweigter Alkylrest mit 7 bis 17 C-Atomen ist
und/oder 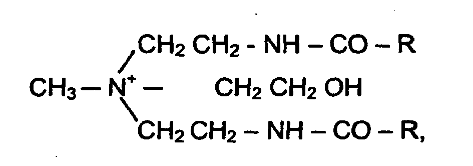 in der R geradkettige oder verzweigte Alkylreste mit 8 bis 18 C-Atomen sind
und/oder 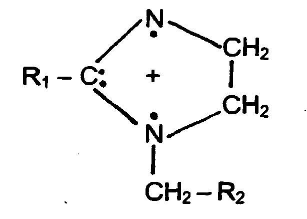 in der R₁ ein Alkyl- oder Alkylenrest mit 4 bis 20 C-Atomen darstellt und R₂ CH₂OH oder CH₂NH-COR₃, wobei R₃ ein Alkylrest mit 8 bis 18 C-Atomen ist, bedeuten.

10. Verwendung einer Schneidflüssigkeit nach einem oder mehreren der Ansprüche 7 bis 9, **dadurch gekennzeichnet, dass** sie Dilauryldimethylammoniumhydroxid und/oder Distearyldimethylammoniumhydroxid und/oder Trimethylhexadecylammoniumhydroxid und/oder Trimethyloctylammoniumhydroxid enthält.

## Claims

1. A method of dividing glass comprising the steps of
- producing a line-shaped score on the glass
- applying to the score, during or immediately after its production, an aqueous liquid which contains an organic ionic compound which consists of a cation having a positively charged nitrogen atom and a hydroxyl ion as anion,
- dividing the glass along the score line by applying a force.

2. A method according to claim 1, **characterized in that** the score is produced by heating the glass along the score line and immediately subsequent application of the aqueous liquid.

3. A method according to claim 2, **characterized in that** the heating of the glass along the score line is effected by means of a laser beam.

4. A method according to one or more of claims 1 to 3, **characterized in that** the aqueous liquid used contains 0.005% to 1% by weight of the organic ionic compound.

5. A method according to one or more of claims 1 to 4, **characterized in that** the cation of the organic ionic compound used has the formula 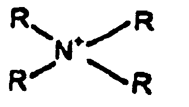 where 2 to 3 of the R radicals are alkyl radicals having 1 to 2 carbon atoms and 1 to 2 of the R radicals are straight-chained or branched alkyl radicals having 8-18 carbon atoms,
and/or 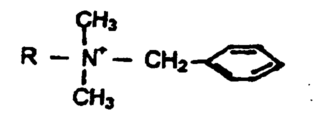 where R is a straight-chained or branched alkyl radical having 7 to 17 carbon atoms,
and/or 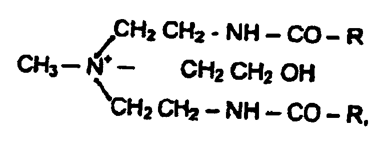 where R radicals are straight-chained or branched alkyl radicals having 8 to 18 carbon atoms,
and/or 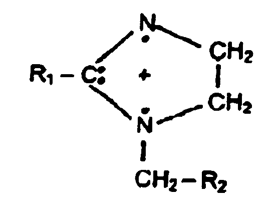 where R₁ is an alkyl or alkylene radical having 4 to 20 carbon atoms and R₂ is CH₂OH or CH₂NH-COR₃, where R₃ is an alkyl radical having 8 to 18 carbon atoms.

6. A method according to one or more of claims 1 to 5, **characterized in that** the aqueous liquid used contains hexadecyltrimethylammonium hydroxide.

7. The use of an aqueous liquid which contains an organic ionic compound consisting of a cation having a positively charged nitrogen atom and a hydroxyl ion as anion, as cutting fluid for the dividing of glass.

8. The use of a cutting fluid according to claim 7, **characterized in that** it contains 0.005% to 1% by weight of the organic ionic compound.

9. The use of a cutting fluid according to Claim 7 or 8, **characterized in that** it contains an organic ionic compound where the cation has the formula 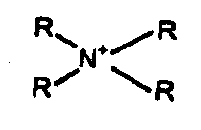 where 2 to 3 of the R radicals are alkyl radicals having 1 to 2 carbon atoms and 1 to 2 of the R radicals are straight-chained or branched alkyl radicals having 8-18 carbon atoms,
and/or 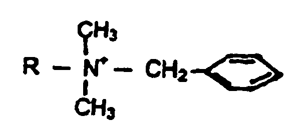 where R is a straight-chained or branched alkyl radical having 7 to 17 carbon atoms,
and/or 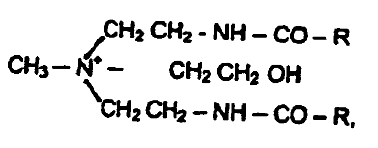 where R radicals are straight-chained or branched alkyl radicals having 8 to 18 carbon atoms,
and/or 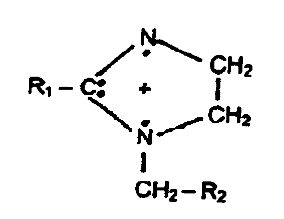 where R₁ is an alkyl or alkylene radical having 4 to 20 carbon atoms and R₂ is CH₂OH or CH₂NH-COR₃, where R₃ is an alkyl radical having 8 to 18 carbon atoms.

10. The use of a cutting fluid according to one or more of claims 7 to 9, **characterized in that** it contains dilauryldimethylammonium hydroxide and/or distearyldimethylammonium hydroxide and/or trimethylhexadecylammonium hydroxide and/or trimethyloctylammomium hydroxide.

## Revendications

1. Procédé destiné à fractionner du verre, comprenant les étapes suivantes
- réalisation d'une rayure linéaire sur le verre
- ladite rayure étant, pendant ou immédiatement après sa réalisation, traitée avec un liquide aqueux contenant un composé organique ionique constitué d'un cation comportant un atome d'azote à charge positive et d'un ion hydroxyle en tant qu'anion
- fractionnement du verre le long de la ligne de rayure en appliquant une force.

2. Procédé selon la revendication 1, **caractérisé en ce que** la rayure est réalisée par chauffage du verre le long de la ligne de rayure, suivi immédiatement d'un traitement avec ledit liquide aqueux.

3. Procédé selon la revendication 2, **caractérisé en ce que** ledit chauffage du verre le long de la ligne de rayure est réalisé au moyen d'un faisceau laser.

4. Procédé selon l'une ou plusieurs des revendications 1 à 3, **caractérisé en ce que** l'on utilise un liquide aqueux contenant entre 0,005 et 1 % en poids dudit composé organique ionique.

5. Procédé selon l'une ou plusieurs des revendications 1 à 4, **caractérisé en ce que** l'on utilise un composé organique ionique dont le cation répond à la formule 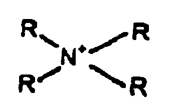 dans laquelle 2 à 3 des R sont des radicaux alkyle renfermant 1 à 2 atomes de C et 1 à 2 des radicaux R sont des radicaux alkyle linéaires ou ramifiés renfermant 8 à 18 atomes de C
et/ou 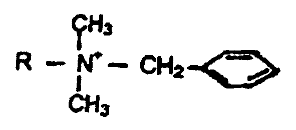 dans laquelle R est un radical alkyle linéaire ou ramifié renfermant 7 à 17 atomes de C.
et/ou 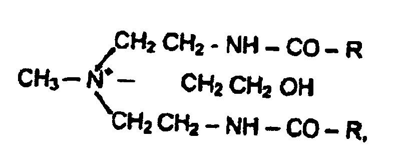 dans laquelle R sont des radicaux alkyle linéaires ou ramifiés renfermant 8 à 18 atomes de C
et/ou 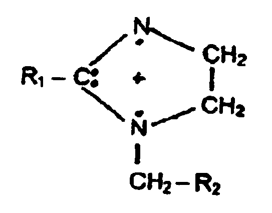 dans laquelle R₁ représente un radical alkyle ou alkylène renfermant 4 à 20 atomes de C et R₂ signifie CH₂OH ou CH₂NH-COR₃, R₃ étant un radical alkyle renfermant 8 à 18 atomes de C.

6. Procédé selon l'une ou plusieurs des revendications 1 à 5, **caractérisé en ce que** l'on utilise un liquide aqueux contenant de l'hydroxyde d'héxadécyltriméthylammonium.

7. Utilisation d'un liquide aqueux contenant un composé organique ionique constitué d'un cation comportant un atome d'azote à charge positive et d'un ion hydroxyle en tant qu'anion, comme fluide de coupe destiné à fractionner du verre.

8. Utilisation d'un fluide de coupe selon la revendication 7, **caractérisé en ce qu'**il contient 0,005 à 1 % en poids dudit composé organique ionique.

9. Utilisation d'un fluide de coupe selon les revendications 7 ou 8, **caractérisé en ce qu'**il contient un composé organique ionique dont le cation répond à la formule 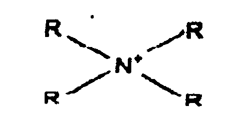 dans laquelle 2 à 3 des R sont des radicaux alkyle renfermant 1 à 2 atomes de C et 1 à 2 des radicaux R sont des radicaux alkyle linéaires ou ramifiés renfermant 8 à 18 atomes de C
et/ou 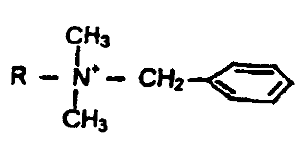 dans laquelle R est un radical alkyle linéaire ou ramifié renfermant 7 à 17 atomes de C
et/ou 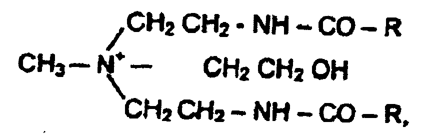 dans laquelle R sont des radicaux alkyle linéaires ou ramifiés renfermant 8 à 18 atomes de C
et/ou 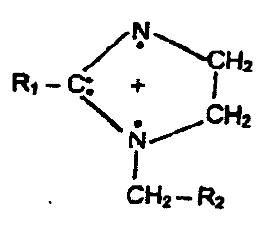 dans laquelle R₁ représente un radical alkyle ou alkylène renfermant 4 à 20 atomes de C et R₂ signifie CH₂OH ou CH₂NH-COR₃, R₃ étant un radical alkyle renfermant 8 à 18 atomes de C.

10. Utilisation d'un fluide de coupe selon l'une ou plusieurs des revendications 7 à 9, **caractérisé en ce qu'**il contient de l'hydroxyde de dilauryldiméthylammonium et/ou de l'hydroxyde de distéaryldiméthylammonium et/ou de l'hydroxyde de triméthylhéxadécylammonium et/ou de l'hydroxyde de triméthyloctylammonium.
